# EUROPÄISCHE PATENTSCHRIFT

(11) **EP 1 072 569 B1**
(45) Veröffentlichungstag und Bekanntmachung des Hinweises auf die Patenterteilung: **23.10.2002**
(21) Anmeldenummer: 99113390.1
(22) Anmeldetag: 10.07.1999
(51) Int. Cl.: C04B 35/043, C04B 35/443, C04B 35/66, C03B 7/086, C03B 5/167, C03B 17/04

(54) **Verfahren zur Herstellung von keramischen hochtemperaturbeständigen Werkstoffen mit einem einstellbaren thermischen Ausdehnungskoeffizienten und deren Verwendung**
Process for manufacturing ceramic materials having adjustable coefficient of thermal expansion and their use
Procédé de fabrication de matériaux céramiques à coefficient de dilatation thermique ajustable et leurs applications

(43) Veröffentlichungstag der Anmeldung: 31.01.2001
(73) Patentinhaber: Schott Glas, 55122 Mainz (DE); CARL-ZEISS-STIFTUNG trading as SCHOTT GLAS, 55122 Mainz (DE)
(72) Erfinder: Zborowski, Janusz, Dr., 55218 Ingelheim (DE); Eichhorn, Uwe, Dr., 55126 Mainz (DE); Aloy-Dols, Bartolome, 55120 Mainz (DE)

(56) Entgegenhaltungen:
- US-A- 4 400 474
- US-A- 4 780 434
- PATENT ABSTRACTS OF JAPAN vol. 1995, no. 08, 29. September 1995 (1995-09-29) -& JP 07 126061 A (KOUNOSHIMA KAGAKU KOGYO KK), 16. Mai 1995 (1995-05-16)

## Beschreibung

Die Erfindung bezieht sich auf ein Verfahren zu Herstellung von keramischen, hochtemperaturbeständigen Werkstoffen mit einem thermischen Ausdehnungskoeffizienten α_{30-1400°C} im Bereich von Platin und dessen Legierungen von 9 x 10⁻⁶K⁻¹ bis 15 x 10⁻⁶K⁻¹ und auf die Verwendung dieser keramischen Werkstoffe.

Magnesiawerkstoffe sind als feuerfeste Werkstoffe, insbesondere in Form von Steinen seit langem bekannt und haben in den letzten 30 Jahren große Bedeutung z. B. als Kammergittersteine in der Glasindustrie, in Roheisenmischern als Verschleißfutter und auch bei Drehrohröfen in der Zementindustrie gewonnen.

Die Merkmale von Magnesiasteinen und damit die Herstellung richten sich nach dem Verwendungszweck. Übliche Steine haben eine hohe Kaltdruckfestigkeit, eine niedrige Porosität und erweichen unter Belastung in oxidierender Atmosphäre bei etwa 1400 °C.

Allerdings ist die Temperaturwechselbeständigkeit nicht sehr gut, da die Wärmedehnung bei 1400 °C bereits 2 % erreichen kann.

Erhebliche Verbesserungen lassen sich hier durch flußmittelarme, insbesondere eisenarme Magnesiasinter als Rohstoffe, Variationen des Kornaufbaus, des Verdichtungsgrades oder durch Zusätze, beispielsweise von Spinell (Mg Al₂O₄) oder Chromerz erreichen.
Dabei hat der Anteil von Magnesiaspinellsteinen in den letzten Jahren auf Kosten der chromerz-haltigen Varianten wegen der Umweltproblematik deutlich zugenommen.

Aus der Japanischen Anmeldung JP 07-126061 A ist ein auf MgO/MgAl₂O₄ basierender gesinterter Werkstoff bekannt, dessen thermischer Ausdehnungskoeffizient ebenfalls eingestellt werden kann.

Er besteht aus MgO- und MgAl₂O₄-Teilchen mit einer durchschnittlichen Partikelgröße von ≤ 50 µm, hat eine relative Dichte von mindestens 98 % und weist Verunreinigungen von ≤ 1 % auf.

Dieser Werkstoff ist ideal als elektrisch isolierender Dichtwerkstoff für Brennstoff-Zellen einzusetzen, wobei zusätzlich sein thermischer Ausdehnungskoeffizient dem der metallischen Elektroden der Brennstoff-Zelle angepaßt werden kann.

Das United States Patent 4,780,434 hat eine feuerfeste Zusammensetzung für Stahl-Guss zum Gegenstand, die sich zum Formen eines Gußtrichters am Boden eines Zwischenbehälters eignet, bestehend aus 10 - 30 Gewichtsteilen eines Aluminiumoxid-Magnesiumoxid-Spinell-Materials, das 40 - 70 Gew.-% Al₂O₃, 25 - 60 Gew.-% MgO und 10 % oder weniger Verunreinigungen enthält, und aus 90 - 70 Gewichtsteilen eines Magnesiumoxidmaterials, das wenigstens 90 Gew.-% MgO enthält, wobei die Zusammensetzung 10 - 25 Gew.-% Al₂O₃ und 90 - 75 Gew.-% MgO enthält. 1 - 10 Gewichtsteile Al₂O₃-Material können zusammen mit dem Aluminiumoxid-Magnesiumoxid-Spinell-Material und dem Magnesiumoxidmaterial zugefügt werden, um die feuerfeste Zusammensetzung zu bilden.

Das United States Patent 4,400,474 hat eine hydraulisch gebundene, bei Raumtemperatur abbindende feuerfeste Zusammensetzung zum Inhalt, die ebenfalls chemischen Angriffen, dem Verschleiß und der Erosion von flüssigen Metallen, insbesondere von Stahl widerstehen soll.

Aus der deutschen Auslegeschrift DE-AS 1 471 174 ist ein Verbundkörper aus einem Teil aus metallischem Titan und einem Keramikgegenstand aus dem System Magnesiumoxid-Aluminiumoxid-Titandioxid bekannt.

Dieser Verbundkörper ist gekennzeichnet durch eine zumindest teilweise chemische Bindung zwischen Titan und Keramik. Dies wird durch den zwingenden Gehalt an Titandioxid deutlich.

Der Verbundkörper darf auch ausweislich keine kieselsäurehaltige Keramik enthalten. Der Verbundkörper wird zur Herstellung von Elektronenröhren verwendet. Des weiteren handelt es sich bei dem in der DE-AS 1 471 174 angegebenen Verfahren zur Herstellung des Verbundkörpers um eine Mischfällung. Im Gegensatz dazu läßt sich die erfindungsgemäße Keramik aber ausschließlich durch Sinter- und/oder Schmelzprozesse herstellen.

Ein keramischer Werkstoff aus wenigstens zwei Metalloxiden, wobei die Metalle unterschiedliche Wertigkeiten aufweisen ist beispielsweise auch aus der EP 0 739 864 A1 abzuleiten, mit einem Spinell als Hauptphase, wobei das Oxid des niederwertigen Metalls über das stöchiometrische Verhältnis 1:1 hinaus im Spinellgitter vorhanden und darin gelöst ist. Dabei ist der metallische Anteil des ersten Oxides Magnesium und der metallische Anteil des zweiten Oxides Aluminium.

Solche keramischen Werkstoffe nach der EP 0 739 864 A1 kommen in der chemischen Industrie, der Metallindustrie und der keramischen Industrie dort zur Anwendung, wo beispielsweise alkalische Medien bei erhöhter Temperatur in gas- und/oder flüssigkeitsdichte Behälter eingeschlossen, in Leitungen geführt oder über diese separiert werden müssen.

Bei diesen Werkstoffen muß jedoch immer sichergestellt sein, daß die Menge des Magnesiumoxids nur um soviel größer ist, daß das MgO in dem Spinell gelöst bleibt, und als einzige Phase nur der Spinell röntgenographisch zu identifizieren ist.

Die Verwendung einer feuerfesten Gießmasse auf Basis eines hydratationsempfindlichen Metalloxides, wie MgO, mit Kohlenstoff-Anteilen, einem Dispergiermittel und reaktiver Kieselsäure zur Auskleidung oder Reparatur der erosionsgefährdeten Zonen eines metallurgischen Schmelzgefäßes legt die DE 195 18 468 A1 offen.

Als weitere Literaturstellen, die MgO/Al₂O₃-Spinell-Werkstoffe betreffen, sind beispielhaft anzuführen:
- "MAGNESIO-ALUMINATE SPINEL - A POTENTIAL RAW MATERIAL FOR MAKING NEW GENERATION REFRACTORIES" von B. Ghosh, P. Chakraborty, P.G. Pal, S. K Mitra, and K. S. Swaminathan; Tata Refractories Limited, India,
   veröffentlicht in "Global Development of Refractories", Proc. of the UNITECR '95 Congress, Kyoto, Japan, Nov. 19 - 22, 1995, Seiten 541 - 549.
- "SINTERED MgO CLINKER CONTAINING Al₂O₃" von Kaneyasu, Akira and Shimmatsu, Satoshi, Technical Div., Ube Chemical Ind. Co.Ltd., Ube, Japan, and Shima, Hiromi, Faculty of Engineering, Yamaguchi Univ., Ube, Japan,
   veröffentlicht in "Global Development of Refractories", Proc. of the UNITECR '95 Congress, Kyoto, Japan, Nov. 19 - 22, 1995, Seiten 550 - 557.
- "PERIKLAS-SPINELLERZEUGNISSE MIT VERBESSERTEN EIGENSCHAFTEN DURCH GEZIELTEN TiO₂-ZUSATZ" von Wolfgang Schulle, Ph. Gia Khanh, und Vu Tuan Anh,
   veröffentlicht in Veitsch-Radex Rundschau 1 - 2/1995, Seiten 563 - 567.
- "MECHANICAL PROPERTIES OF MODEL MAGNESIA-SPINEL COMPOSI-TE MATERIAL" von C. Aksel, R. W. Davidge, P.D. Warren and F. L. Riley, School of Materials, University of Leeds, Leeds LS 2, 9JT, UK,
   veröffentlicht in Key Engineering Materials Vols. 132 - 136 (1997), Seiten 1774 - 1777; 1997 Trans Tech Publications, Switzerland.

Keine der angeführten Literaturstellen befaßt sich aber mit der Aufgabenstellung und der Lösung der vorliegenden Erfindung.

In Glasschmelzöfen und bei der Heißformgebung von Glasgegenständen werden Bauteile eingesetzt, die aus Refraktärkeramik und -metallüberzügen aufgebaut sind. Die dabei zur Zeit eingesetzten keramischen feuerfesten "Träger"-Werkstoffe weisen mit thermischen Ausdehnungskoeffizienten von ca. 0,5 x 10⁻⁸ K⁻¹ (Quarzal) bis ca. 8 x 10⁻⁶ K⁻¹ (Sillimanit, Mullit, Korund) im Temperaturbereich 30 -1400 °C deutlich niedrigere Werte auf als Platin und Pt-Legierungen mit α_{30-1400 °C} von 11,5 x 10⁻⁶ K⁻¹. Schadensanalysen weisen Falten- und Rißbildung im Platinmantel als häufige Ausfallursache der eingesetzten Bauteile aus, die infolge der unterschiedlichen thermischen Ausdehnung beider Werkstoffe entstanden sind.

Aufgabe der vorliegenden Erfindung ist es daher, ein Verfahren zur Herstellung von keramischen, feuerfesten Werkstoffen mit einem an Platin und dessen Legierungen anpaßbaren thermischen Ausdehnungskoeffizienten vorzustellen.
Weiter ist es Aufgabe der Erfindung die erfindungsgemäßen Werkstoffe bezüglich Zusammensetzung, Kornaufbau, Formgebungsverfahren, Brennbedingungen und weiterer Eigenschaften, wie mechanische Festigkeit, thermomechanische Eigenschaften, Bearbeitbarkeit durch Drehen, Schleifen und Bohren so zu optimieren, daß sie den bisher eingesetzten Werkstoffen wie Sillimanit und Mullit nahe kommen.

Die Aufgabe der Erfindung wird dadurch gelöst, daß Abmischungen von Komponenten die Magnesiumoxid (MgO) mit Anteilen zwischen 30 - 99 Gewichtsteilen und Magnesiumaluminat (Mg Al₂O₄) mit Anteilen zwischen 1 - 70 Gewichtsteilen in jeweils verschiedenen Korngrößenverteilungen in den Komfraktionen < 0,1 mm, 0 - 1 mm und 1 - 5 mm enthalten, gebrannt werden, wobei durch die Auswahl der Abmischungen und der Korngrößenverteilung in den Abmischungen der Ausdehnungskoeffizient eingestellt wird.

Eine zweite Möglichkeit die Aufgabe der Erfindung zu lösen, besteht darin Abmischungen von Komponenten, die Magnesiumoxid (MgO) mit Anteilen zwischen 30 - 99 Gewichtsteilen und Magnesiumaluminat (MgAl₂O₄) mit Anteilen zwischen 1 - 70 Gewichtsteilen enthalten zur Bildung von Mg Al₂O₄ in jeweils verschiedenen Korngrößenverteilungen in den Kornfraktionen < 0,1 mm, 0 - 1 mm und 1 - 5 mm mit einem so hohen Überschuß an MgO zu brennen, daß kein weiterer Zusatz von MgO bildenden Komponenten notwendig ist.

Durch die Zusammensetzung, den Komaufbau, und das Herstellungsverfahren lassen sich dabei auch Feuerfestigkeit und thermomechanische Eigenschaften der erfindungsgemäßen Keramiken an die jeweiligen Einsatzbedingungen der herzustellenden Bauteile anpassen.

Weitere Eigenschaften wie mechanische Festigkeit und Bearbeitbarkeit durch Drehen, Schleifen und Bohren kommen dann auch denen der bisher eingesetzten Werkstoffe, insbesondere Sillimanit und Mullit, sehr nahe oder sind z. T. sogar besser.

Die Werkstoffe werden nach einer Ausführungsform der Erfindung aus Abmischungen mit Anteilen von 30 - 99 Gewichtsteilen MgO und mit Anteilen von 1 - 70 Gewichtsteilen Mg Al₂O₄ aufgebaut. MgO wird dabei bevorzugt als Sintermagnesit und Mg Al₂O₄ als Magnesiumaluminatspinell eingebracht. MgO und Mg Al₂O₄ werden in den Kornfraktionen < 0,1 mm, 0 - 1 mm und 1 - 5 mm verwendet.

Das jeweilige Kornspektrum der eingesetzten Rohstoffe kann an die Größe der herzustellenden Teile und an spezielle Anforderungen wie z. B. die Oberflächengüte bzw. -rauhigkeit des zu bearbeitenden Formkörpers angepaßt werden, in dem z. B. Rohstoff mit einer maximalen Korngröße von 0,01 mm, 0,1 mm, 1 mm oder 5 mm eingesetzt wird, wobei die Komgrößenverteilung, d. h. die Anteile der einzelnen Kornfraktionen, im allgemeinen nach dem Prinzip einer möglichst dichten Packung gewählt werden.

Üblicherweise enthalten die Abmischungen Zusätze von 0 bis 10 Gewichtsteilen, insbesondere von 1,5 bis 7 Gewichtsteilen Kalziumaluminatzement und Zusätze von 0 bis 10 Gewichtsteilen, insbesondere von 2 bis 8 Gewichtsteilen Mikrosilika. Des weiteren werden Zusätze von 0 bis 12 Gewichtsteilen, insbesondere von 1 bis 10 Gewichtsteilen Wasser zugegeben.

In einer weiteren Ausführungsform der erfindungsgemäßen Werkstoffe wird statt einer hydraulischen Bindung mit Kalziumaluminatzement (CA-Zement) das Pressen als Formgebungsverfahren angewendet, so daß keine Zusätze von CA-Zement und Mikrosilika eingeführt werden, sondern ein organisches Preßhilfsmittel und/oder Binder in einer Menge von 0 - 20 Gewichtsteilen und/oder Wasser in einer Menge von 0 -12 Gewichtsteilen.

Als weitere Alternative besteht die Möglichkeit, dem Versatz einen Zusatz von 0,0 - 0,5 Gewichtsteilen Schäumungsmittel z. B. anionische Tenside mit einem Stabilisator, z. B. Polysacharid und/oder von 0 - 20 Gewichtsteilen porenbildenden, z. B. ausbrennbaren Substanzen, wie Kunststoffgranulaten beizumischen, um eine Porosität definierter Größe zu erreichen und so Dichte und Wärmeleitfähigkeit des Werkstoffes zu senken und anzupassen.

Die Abmischungen können also auch organische Zusätze als Binder, Preßhilfsmittel, Schäumungsmittel, porenbildende Ausbrennmittel in Mengen von 0 bis 20 Gewichtsteilen enthalten. In bevorzugter Ausführungsform sind die Komponenten zur Bildung von Mg Al₂O₄ genau stöchiometrisch zur Ausbildung dieser Verbindung eingestellt, eingebracht. Es ist aber nach der Erfindung auch möglich, die Komponenten zur Bildung von Mg Al₂O₄ überstöchiometrisch, mit einem Überschuß an Al₂O₃ oder MgO einzubringen.

Zusammenfassend kann gesagt werden, daß nach der vorliegenden Erfindung die Trägersubstanzen von Magnesiumaluminat sowohl als stöchiometrisch auf die Verbindung Mg Al₂O₄ eingestellte, als auch einen Überschuß an MgO oder an Al₂O₃ aufweisende Ausgangsstoffe eingesetzt werden können. Als Variante in der Anwendung einer Magnesiumaluminatträgersubstanz ist es möglich, ein gesintertes bzw. geschmolzenes Produkt mit entsprechend hohem MgO-Überschuß zu verwenden, so daß die zusätzliche Verwendung einer MgO-Trägersubstanz nicht mehr notwendig ist und als Hauptkomponente nur ein Sinter bzw. Schmelzprodukt eingesetzt wird. In alternativen Ausführungsformen können als Trägersubstanzen von Magnesiumoxid und -aluminat auch geschmolzene Fertigprodukte, wie CerMagFX und CerMag 67 der Fa. CERMATCO Ltd. verwendet werden.

Die Erfindung wird nachstehend an Hand von 4 Ausführungsbeispielen noch näher beschrieben:

### Beispiel 1

Zwei Hauptkomponenten, Magnesiumoxid in Form von Sintermagnesit und Magnesiumaluminat in Form von MA-Spinellsinter werden in den im folgenden angegebenen Kornfraktionen und Gewichtsteilen, mit Zusätzen von Kalziumaluminat-(CA-)Zement, Mikrosilika und Wasser (Anteile bezogen auf die Gesamtmenge der Hauptkomponenten) in einem Mischer homogenisiert und zu einer Masse verarbeitet, die in einer Form mittels Vibrationstechnik verdichtet wird.

| Sintermagnesit (MgO) | |
|---|---|
| < 0.1 mm | 35 % |
| 1 - 3 mm | 30 % |

| MA-Spinellsinter (Mg Al₂O₄) | |
|---|---|
| 0 - 1 mm | 15 % |
| 1 - 3 mm | 20 % |

| Zusätze (Anteile bezogen auf die Gesamtmenge der Hauptkomponenten) | | |
|---|---|---|
| CA-Zement | 6 % | (z. B. CA-25® der Firma ALCOA) |
| Mikrosilika | 3 % | (z. B. Silubit FB 10® der Firma Zschimmer & Schwarz) |
| Wasser | 6 % | |

Nach einer Abbindezeit des CA-Zements von ca. 24 h wird der Rohling entformt und bei ca. 110 °C bis zu Gewichtskonstanz getrocknet. Anschließend wird er in einem elektrisch beheizten Kammerofen nach folgendem Temperaturprogramm gebrannt:

| | | |
|---|---|---|
| 100 K/h | 1400 °C | 6 h |
| 100 K/h | 1000 °C | 0 h |
| Abkühlung auf Raumtemperatur (Heizung aus) | | |

Der entsprechend dem oben beschriebenen Verfahren hergestellte Körper weist ein thermisches Ausdehnungsverhalten auf, das dem der PtRh10-Legierung sehr gut angepaßt ist.

Die Werte der entsprechenden thermischen Ausdehnungskoeffizienten betragen:

| | PtRh10 | M-MA-Werkstoff (MgO - Mg Al₂O₄) (nach Beispiel 1) |
|---|---|---|
| α_{30-1400°C} [1/K]·10⁻⁶ | 11,6 | 11,0 |
| α _{1000-1300 °C} [1/K]·10⁻⁶ | 13,3 | 13,5 |

Der nach dem im oben beschriebenen Beispiel hergestellte Werkstoff kann sowohl im ungebrannten als auch im gebrannten Zustand, ähnlich wie die bisher in den Keramik-Edelmetall-Verbunden eingesetzten Werkstoffe Sillimanit und Mullit maschinell bearbeitet werden und weist eine ähnliche mechanische Festigkeit auf.

### Beispiel 2

Die Vorgehensweise ist ähnlich wie im Beispiel 1, mit folgenden Änderungen in den Anteilen und den Kornfraktionen der Hauptkomponenten:

| Sintermagnesit (MgO) | |
|---|---|
| < 0,1 mm | 15% |
| 0 - 1 mm | 30 % |
| 1 - 3 mm | 30 % |

| MA-Spinellsinter (Mg Al₂O₄) | |
|---|---|
| <0,1 mm | 20 % |
| 0 - 1 mm | 5% |

Der wie im Beispiel 1 hergestellte Werkstoff weist entsprechend den im folgenden aufgeführten Werten einen im Temperaturbereich von 30 - 1400 °C um etwa 2 % höheren thermischen Ausdehnungskoeffizienten auf, als die PtRh10-Legierung.

| | PtRh10 | M-MA-Werkstoff (MgO - Mg Al₂O₄) (nach Beispiel 2) |
|---|---|---|
| α_{30-1400 °C} [1/K]·10-6 | 11,6 | 11,8 |
| α _{1000-1300 °C} [1/K]·10⁻⁶ | 13,3 | 14,5 |

Dadurch ist es möglich eine Zugspannung in dem die Keramik umgebenden Metall, bei einer Anwendungstemperatur von 800 - 1400 °C zu erzeugen, so daß einer Entstehung von Falten noch effektiver vorgebeugt werden kann. Außerdem ist infolge des deutlich niedrigeren Anteils der Feinkornfraktion (<0,1 mm) des Sintermagnesits die Hydratationsbeständigkeit dieser Werkstoffvariante nach dem Brennen höher als im Fall der Variante nach Beispiel 1.

### Beispiel 3

Die Vorgehensweise ist ähnlich wie im Beispiel 1, mit folgenden Modifikationen in den Anteilen und den Kornfraktionen der Hauptkomponenten:

| Sintermagnesit (MgO) | |
|---|---|
| <0,1 mm | 5% |
| 0 - 1 mm | 75% |

| MA-Spinellsinter (Mg Al₂O₄) | |
|---|---|
| <0,1 mm | 20% |

Der entsprechend dem Beispiel 1 hergestellte Werkstoff weist ein thermisches Ausdehnungsverhalten ähnlich dem der Variante nach Beispiel 2 auf.

| | PtRh10 | M-MA-Werkstoff (MgO - Mg Al₂O₄) (nach Beispiel 3) |
|---|---|---|
| α_{30-1400 °C} [1/K]·10-6 | 11,6 | 11,6 |
| α _{1000-1300 °C} [1/K]·10⁻⁶ | 13,3 | 14,8 |

Durch einen deutlich feineren Kornaufbau zeichnet sich diese Werkstoffvariante durch eine geringere Oberflächenrauhigkeit nach einer mechanischen Bearbeitung aus und eignet sich insbesondere für kleinere Bauteile mit komplizierter Form, bei denen komplexe Geometrien maschinell mit engen Maßtoleranzen ausgearbeitet werden müssen.

### Beispiel 4

Zwei Hauptkomponenten, Magnesiumoxid in Form von Sintermagnesit und Magnesiumaluminat in Form von MA-Spinellsinter werden in den Kornfraktionen und Anteilen wie in einem der Beispiele 1 - 3 homogenisiert und unter Zusatz von 0 - 5 % Wasser und/oder organischen Preßhilfsmitteln in entsprechenden Formen mit Hilfe einer hydraulischen Presse, isostatisch bzw. uniaxial vepreßt.
Die gepreßten Rohlinge werden anschließend bei ca. 110 °C bis zur Gewichtskonstanz getrocknet und bei einer maximalen Brenntemperatur von 1700 °C gebrannt.
Bei dieser Werkstoffvariante können im Vergleich zu den Varianten nach den Beispielen 1 - 3 bessere thermomechanische Eigenschaften erzielt werden. Die Anwendung des hydraulischen Pressens als Formgebungsverfahren ermöglicht die Vermeidung von Zusätzen wie z. B. CA-Zement und Mikrosilika bei der Herstellung der erfindungsgemäßen Feuerfest-Keramik, die durch Bildung von relativ niedrigschmelzenden Eutektika die thermomechanischen Eigenschaften des Werkstoffes negativ beeinflussen können und dessen Anwendung bei Einsatztemperaturen im Bereich oberhalb 1600 °C unter mechanischer Belastung unmöglich machen können.

Durch Anwendung der entsprechend der Erfindung hergestellten Werkstoffe an solchen Stellen, an denen keramische Materialien im Kontakt mit Platin eingesetzt bzw. mit Platin sowie Pt-Legierungen ummantelt werden, z. B. Rührer, Elektroden-Körper, Ziehdüsen, Speiser-Nadeln u. a., können Schäden vermieden werden, die bisher üblicherweise durch unterschiedliche thermische Ausdehnungkoeffizienten von Edelmetall/-legierung und Feuerfest-Material hervorgerufen werden. Auf diese Weise kann die Einsatzdauer solcher Bauteile verlängert werden.
Weiterhin ermöglichen die Werkstoffe durch den an das umgebende Metall angepaßten thermischen Ausdehnungskoeffizienten die Einführung von neuen bzw. verbesserten Formgebungsverfahren, die eine bisher nicht erreichbare Produktqualität ermöglichen.

### Hierfür sei als Beispiel insbesondere aufgeführt:

Beim Einsatz eines entsprechend der Erfindung hergestellten keramischen Trägerkörpers an einer Sonderpfeife (Platin (PtRh10)-ummantelt) einer Dannerrohrzuganlage für Glasrohre wurde eine zumindest 20 mal längere Standzeit als bei einer herkömmlichen Pfeife erreicht.
Dabei wird ein bisher nicht erreichbares, langandauernd niedriges Niveau der Wanddickenunterschiede (WDU) von ≤ 2 - 3 % erreicht, das einen großen Qualitäts- und Herstellkosten-Vorsprung zur Folge hat.

Die durchschnittliche Standzeit einer herkömmlichen Pfeife - schlickergegossene Aluminosilicat-Keramik (Schamotte), ohne Platinummantellung - beträgt ca. 14 - 20 Tage. Der Austausch der Pfeife erfolgt meist wegen der Ziehstreifen und/oder zu großen Wanddickenunterschieden (WDU).

Die Standzeit der ersten Sonderpfeifen mit einem keramischen Träger-Werkstoff entsprechend dieser Erfindung, platinummantelt hergestellt, betrug über 300 Tage ohne Unterbrechung, ohne Ziehstreifen, ohne Kristalle, wobei darüberhinaus mehrfacher Einsatz des keramischen Körpers möglich ist.

| | konventionelle Pfeife | Sonderpfeife |
|---|---|---|
| WDU[%] | ca. 2 - 7 | 2 - 3 |
| | mit zunehmender Einsatzdauer steigender WDU-Wert | gleichbleibend stabil |

## Patentansprüche

1. Verfahren zur Herstellung von keramischen hochtemperaturbeständigen Werkstoffen aus dem System MgO - Al₂O₃ mit einem thermischen Ausdehnungskoeffizienten α von Platin und dessen Legierungen, der im Bereich von 9 x 10⁻⁶ K⁻¹ bis 15 x 10⁻⁶ K⁻¹ liegt,
**dadurch gekennzeichnet,**
**daß** Abmischungen von Komponenten, die Magnesiumoxid (MgO) mit Anteilen zwischen 30 - 99 Gewichtsteilen und Magnesiumaluminat (MgAl₂O₄) mit Anteilen zwischen 1 - 70 Gewichtsteilen in jeweils verschiedenen Korngrößenverteilungen in den Kornfraktionen < 0,1 mm, 0 - 1 mm, 1 - 5 mm enthalten, gebrannt werden, wobei durch die Auswahl der Abmischungen und der Korngrößenverteilung in den Abmischungen der Ausdehnungskoeffizient eingestellt wird.

2. Verfahren nach Anspruch 1,
**dadurch gekennzeichnet,**
**daß** MgO als Sintermagnesit und Mg Al₂O₄ als Magnesiumaluminatspinell in die Abmischungen eingebracht wird.

3. Verfahren nach den Ansprüchen 1 bis 2,
**dadurch gekennzeichnet,**
**daß** die Komponenten zur Bildung von Mg Al₂O₄ stöchiometrisch zur Ausbildung dieser Verbindung eingestellt, eingebracht werden.

4. Verfahren nach den Ansprüchen 1 bis 2,
**dadurch gekennzeichnet,**
**daß** die Komponenten zur Bildung von Mg Al₂O₄ überstöchiometrisch mit einem Überschuß an Al₂O₃ oder MgO eingebracht werden.

5. Verfahren zur Herstellung von keramischen hochtemperaturbeständigen Werkstoffen aus dem System MgO - Al₂O₃ mit einem thermischen Ausdehnungskoeffizienten α von Platin und dessen Legierungen, der im Bereich von 9 x 10⁻⁶K⁻¹ bis 15 x 10⁻⁶K⁻¹ liegt,
**dadurch gekennzeichnet,**
**daß** Abmischungen von Komponenten, die Magnesiumoxid (MgO) mit Anteilen zwischen 30 - 99 Gewichtsteilen und Magnesiumaluminat (MgAl₂O₄) mit Anteilen zwischen 1 - 70 Gewichtsteilen enthalten zur Bildung von MgAl₂O₄ in jeweils verschiedenen Korngrößenverteilungen in den Kornfraktionen < 0,1 mm, 0 - 1 mm, 1 - 5 mm mit einem so hohen Überschuß an MgO gebrannt werden, daß kein weiterer Zusatz von MgO bildenden Komponenten notwendig ist, wobei durch die Auswahl der Abmischungen und der Korngrößenverteilung dieser Abmischungen der Ausdehnungskoeffizient eingestellt wird.

6. Verfahren nach den Ansprüchen 1 bis 5,
**dadurch gekennzeichnet,**
**daß** in die Abmischungen Zusätze von 0 bis 10 Gewichtsteilen Kalziumaluminatzement eingemischt werden.

7. Verfahren nach Anspruch 6,
**dadurch gekennzeichnet,**
**daß** in die Abmischungen Zusätze von 1,5 bis 7 Gewichtsteilen Kalziumaluminatzement eingemischt werden.

8. Verfahren nach mindestens einem der Ansprüche 1 bis 7,
**dadurch gekennzeichnet,**
**daß** in die Abmischungen Zusätze von 0 bis 10 Gewichtsteilen Mikrosilika eingebracht werden.

9. Verfahren nach Anspruch 8,
**dadurch gekennzeichnet,**
**daß** in die Abmischungen Zusätze von 2 bis 8 Gewichtsteilen Mikrosilika eingebracht werden.

10. Verfahren nach mindestens einem der Ansprüche 1 bis 9,
**dadurch gekennzeichnet,**
**daß** zu den Abmischungen Zusätze von 0 bis 12 Gewichtsteilen Wasser gegeben werden.

11. Verfahren nach Anspruch 10,
**dadurch gekennzeichnet,**
**daß** zu den Abmischungen Zusätze von 1 bis 10 Gewichtsteilen Wasser gegeben werden.

12. Verfahren nach mindestens einem der Ansprüche 1 bis 11,
**dadurch gekennzeichnet,**
**daß** zu den Abmischungen organische Zusätze, als Binder, Preßhilfsmittel, Schäumungsmittel, porenbildende Ausbrennmittel in Mengen von 0 bis 20 Gewichtsteilen gegeben werden.

13. Verfahren nach mindestens einem der Ansprüche 1 bis 12,
**dadurch gekennzeichnet,**
**daß** die Komponenten in einem vorgesinterten Zustand (kombinierter Sinter) eingebracht werden.

14. Verfahren nach mindestens einem der Ansprüche 1 bis 12,
**dadurch gekennzeichnet,**
**daß** die Komponenten als Sinter- oder Schmelzprodukte in die Abmischungen eingebracht werden.

15. Verwendung eines keramischen Werkstoffes hergestellt nach mindestens einem der vorhergehenden Ansprüche 1 bis 14 als Träger-Bauteil für Metallüberzüge für Rührer, Elektroden-Körper, Ziehdüsen, Speiser-Nadeln und Rohrzuganlagen.

## Claims

1. Process for producing ceramic materials, which are able to withstand high temperatures, from the MgO-Al₂O₃ system having a coefficient of thermal expansion α of platinum and its alloys, which lies in the range from 9×10⁻⁶K⁻¹ to 15×10⁻⁶K⁻¹, **characterized in that** blends of components which contain between 30 - 99 parts by weight of magnesium oxide (MgO) and between 1 - 70 parts by weight of magnesium aluminate (MgAl₂O₄), in each case in different grain size distributions in the grain fractions < 0.1 mm, 0 - 1 mm, 1 - 5 mm, are fired, the coefficient of expansion being set by selecting the blends and the grain size distribution in the blends.

2. Process according to Claim 1, **characterized in that** MgO is introduced into the blends as sintered magnesite, and MgAl₂O₄ is introduced into the blends as magnesium aluminate spinel.

3. Process according to Claims 1 to 2, **characterized in that** the components for forming MgAl₂O₄ are introduced set stoichiometrically in order to form this compound.

4. Process according to Claims 1 to 2, **characterized in that** the components for forming MgAl₂O₄ are introduced superstoichiometrically with an excess of Al₂O₃ on MgO.

5. Process for producing ceramic materials, which are able to withstand high temperatures, from the MgO-Al₂O₃ system having a coefficient of thermal expansion α of platinum and its alloys, which lies in the range from 9×10⁻⁶K⁻¹ to 15×10⁻⁶K⁻¹, **characterized in that** blends of components which contain between 30 - 99 parts by weight of magnesium oxide (MgO) and between 1 - 70 parts by weight of magnesium aluminate (MgAl₂O₄) in order to form MgAl₂O₄ are fired, in each case in different grain size distributions in the grain fractions < 0.1 mm, 0 - 1 mm, 1 - 5 mm, with such a high excess of MgO that no further addition of MgO-forming components is required, the coefficient of expansion being set by selecting the blends and the grain size distribution of these blends.

6. Process according to Claims 1 to 5, **characterized in that** additions of 0 to 10 parts by weight of calcium aluminate cement are mixed into the blends.

7. Process according to Claim 6, **characterized in that** additions of 1.5 to 7 parts by weight of calcium aluminate cement are mixed into the blends.

8. Process according to at least one of Claims 1 to 7, **characterized in that** additions of 0 to 10 parts by weight of micro silica are introduced into the blends.

9. Process according to Claim 8, **characterized in that** additions of 2 to 8 parts by weight of micro silica are introduced into the blends.

10. Process according to at least one of Claims 1 to 9, **characterized in that** additions of 0 to 12 parts by weight of water are added to the blends.

11. Process according to Claim 10, **characterized in that** additions of 1 to 10 parts by weight of water are added to the blends.

12. Process according to at least one of Claims 1 to 11, **characterized in that** organic additives, as binders, pressing aids, foaming agents, poreforming burn-out agents are added to the blends in amounts of 0 to 20 parts by weight.

13. Process according to at least one of Claims 1 to 12, **characterized in that** the components are introduced in a presintered state (combined sinter).

14. Process according to at least one of Claims 1 to 12, **characterized in that** the components are introduced into the blends as sintered or fused products.

15. Use of a ceramic material produced in accordance with at least one of the preceding Claims 1 to 14 as substrate component for metal coatings for stirrers, electrode bodies, drawing dies, feeder needles and tube drawing installations.

## Revendications

1. Procédé en vue de la fabrication de matériaux céramiques à haute résistance thermique à partir du système MgO - Al₂O₃, ayant un coefficient de dilatation thermique ∀ du platine et de ses alliages, qui se situe dans le domaine de 9 x 10⁻⁶ K⁻¹ à 15 x 10⁻⁶ K⁻¹, **caractérisé en ce que** l'on brûle des mélanges de composants, qui contiennent de l'oxyde de magnésium (MgO) dans des proportions de 30 - 99 parts en poids et de l'aluminate de magnésium (MgAl₂O₄) dans des proportions de 1 - 70 parts en poids avec, à chaque fois, des répartitions granulométrique différentes dans les fractions de grains < 0,1 mm, 0 - 1 mm, 1 - 5 mm, le coefficient de dilatation étant réglé par la sélection des mélanges et de la répartition granulométrique dans les mélanges.

2. Procédé selon la revendication 1, **caractérisé en ce que** l'on incorpore, dans les mélanges, MgO, en tant que magnésite de frittage, et MgAl₂O₄, en tant que spinelle d'aluminate de magnésium.

3. Procédé selon les revendications 1 à 2, **caractérisé en ce que** les composants sont ajustés et incorporés en vue de la formation stoechiométrique de MgAl₂O₄ en vue de la formation de ce composé.

4. Procédé selon les revendications 1 à 2, **caractérisé en ce que** les composants sont incorporés en vue de la formation de MgAl₂O₄ de manière sur-stoechiométrique avec un excès en Al₂O₃ ou en MgO.

5. Procédé en vue de la fabrication de matériaux céramiques à haute résistance thermique à partir du système MgO - Al₂O₃, ayant un coefficient de dilatation thermique V du platine et de ses alliages, qui se situe dans le domaine de 9 x 10⁻⁶ K⁻¹ à 15 x 10⁻⁶ K⁻¹, **caractérisé en ce que** l'on brûle des mélanges de composants, qui contiennent, en vue de la formation de MgAl₂O₄, de l'oxyde de magnésium (MgO) dans des proportions de 30 - 99 parts en poids et de l'aluminate de magnésium (MgAl₂O₄) dans des proportions de 1 - 70 parts en poids avec, à chaque fois, des répartitions granulométrique différentes dans les fractions de grains < 0,1 mm, 0 - 1 mm, 1 - 5 mm, avec un excès en MgO tel qu'aucune addition supplémentaire de composants formant MgO ne soit nécessaire, le coefficient de dilatation étant réglé par la sélection des mélanges et de la répartition granulométrique de ces mélanges.

6. Procédé selon les revendications 1 à 5, **caractérisé en ce que** l'on ajoute dans les mélanges des additifs de 0 à 10 parts en poids de ciment d'aluminate de calcium.

7. Procédé selon la revendication 6, **caractérisé en ce que** l'on ajoute dans les mélanges des additifs de 1,5 à 7 parts en poids de ciment d'aluminate de calcium.

8. Procédé selon au moins l'une des revendications 1 à 7, **caractérisé en ce que** l'on ajoute aux mélanges des additifs de 0 à 10 parts en poids de micro silice.

9. Procédé selon la revendication 8, **caractérisé en ce que** l'on ajoute aux mélanges des additifs de 2 à 8 parts en poids de micro silice.

10. Procédé selon au moins l'une des revendications 1 à 9, **caractérisé en ce que** l'on ajoute aux mélanges des additifs de 0 à 12 parts en poids d'eau.

11. Procédé selon la revendication 10, **caractérisé en ce que** l'on ajoute aux mélanges des additifs de 1 à 10 parts en poids d'eau.

12. Procédé selon au moins l'une quelconque des revendications 1 à 11, **caractérisé en ce que** l'on ajoute aux mélanges en tant que liant, adjuvant de compression, agent anti-mousse, agent de combustion formant des pores, des additifs organiques dans des quantités de 0 à 20 parts en poids.

13. Procédé selon au moins l'une quelconque des revendications 1 à 12, **caractérisé en ce que** les composants sont introduits dans un état pré fritté (frittage combiné).

14. Procédé selon au moins l'une quelconque des revendications 1 à 12, **caractérisé en ce que** les composants sont introduits dans les mélanges en tant que produits de frittage ou de fusion.

15. Utilisation d'un matériau céramique fabriqué selon au moins l'une quelconque des revendications précédentes 1 à 14 en tant que pièce de support pour des revêtements métalliques pour agitateurs, corps d'électrodes, buses d'étirage, poinçons du feeder et installations d'étirage des tubes.
